# EUROPÄISCHE PATENTANMELDUNG

(11) **EP 0 873 969 A1**
(43) Veröffentlichungstag der Anmeldung: **28.10.1998**
(21) Anmeldenummer: 97106814.3
(22) Anmeldetag: 24.04.1997
(51) Int. Cl.: C01B 13/18, H01M 8/02, H01M 8/12, C01G 37/00, C01G 45/00

(54) **Verfahren zum Herstellen eines keramischen Pulvers zum Pulverbeschichten und Verwendung des Verfahrens beim Herstellen einer Komponente einer Hochtemperatur-Brennstoffzelle**

(71) Anmelder: SIEMENS AKTIENGESELLSCHAFT, 80333 München (DE)
(72) Erfinder: Schnöller, Manfred, Dr., 85778 Haimhausen (DE); Greiner, Horst, Dipl.-Ing., 91301 Forchheim (DE); Rucktäschel, Robert, 95615 Marktredwitz (DE)

(57) **Zusammenfassung**

Das vorliegende Verfahren zum Herstellen eines keramischen Pulvers zum Pulverbeschichten einer Komponente einer Hochtemperatur-Brennstoffzelle umfaßt zwei Schritte. In einem ersten Schritt wird eine Lösung aus wenigstens einem Salz wenigstens eines Metalles und aus einem organischen Komplexbildner thermisch zu einem porösen keramischen Werkstoff zersetzt. Der poröse keramische Werkstoff wird in einem zweiten Schritt zu einem keramischen Pulver pulverisiert.

## Beschreibung

Die Erfindung bezieht sich auf ein Verfahren zum Herstellen eines keramischen Pulvers zum Pulverbeschichten und auf eine Verwendung des Verfahrens beim Herstellen einer Komponente einer Hochtemperatur-Brennstoffzelle.

Es ist bekannt, daß bei der Elektrolyse von Wasser die Wassermoleküle durch elektrischen Strom in Wasserstoff (H₂) und Sauerstoff (O₂) zerlegt werden. In einer Brennstoffzelle läuft dieser Vorgang in umgekehrter Richtung ab. Durch eine elektrochemische Verbindung von Wasserstoff (H₂) und Sauerstoff (O₂) zu Wasser entsteht elektrischer Strom mit hohem Wirkungsgrad und, wenn als Brenngas reiner Wasserstoff H₂ eingesetzt wird, ohne Emission von Schadstoffen und Kohlendioxid (CO₂). Auch mit einem technischen Brenngas, beispielsweise Erdgas oder Kohlegas, und mit Luft (die zusätzlich mit Sauerstoff (O₂) angereichert sein kann) anstelle von reinem Sauerstoff (O₂) erzeugt eine Brennstoffzelle deutlich weniger Schadstoffe und weniger Kohlendioxid (CO₂) als andere Energieerzeuger, die mit fossilen Energieträgern arbeiten. Die technische Umsetzung des Prinzips der Brennstoffzelle hat zu unterschiedlichen Lösungen, und zwar mit verschiedenartigen Elektrolyten und mit Betriebstemperaturen zwischen 80 °C und 1000 °C, geführt.

In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen unterscheiden.

Bei dem aus einer Vielzahl von Hochtemperatur-Brennstoffzellen sich zusammensetzenden Hochtemperatur-Brennstoffzellenstapel (in der Fachliteratur wird ein Brennstoffzellenstapel auch "Stack" genannt) liegen unter einer oberen Verbundleiterplatte, welche den Hochtemperatur-Brennstoffzellenstapel abdeckt, der Reihenfolge nach wenigstens eine Schutzschicht, eine Kontaktschicht, eine Elektrolyt-Elektroden-Einheit, eine weitere Kontaktschicht, eine weitere Verbundleiterplatte, usw.

Die Elektrolyt-Elektroden-Einheit umfaßt dabei zwei Elektroden und einen zwischen den beiden Elektroden angeordneten, als Membran ausgeführten Festelektrolyten. Dabei bildet jeweils eine zwischen benachbarten Verbundleiterplatten liegende Elektrolyt-Elektroden-Einheit mit den beidseitig an der Elektrolyt-Elektroden-Einheit unmittelbar anliegenden Kontaktschichten eine Hochtemperatur-Brennstoffzelle, zu der auch noch die an den Kontaktschichten anliegenden Seiten jeder der beiden Verbundleiterplatten gehören. Dieser Typ und weitere Brennstoffzellen-Typen sind beispielsweise aus dem "Fuel Cell Handbook" von A. J. Appleby und F. R. Foulkes, 1989, Seiten 440 bis 454, bekannt.

Zum Erreichen einer hohen elektrischen und ionischen Leitfähigkeit werden meist keramische Werkstoffe beim Herstellen der Komponenten der Hochtemperatur-Brennstoffzelle eingesetzt. Dabei werden die Komponenten entweder selbst aus einer Keramik hergestellt oder mit einer Schicht aus einer Keramik versehen. Beispielsweise werden die Elektroden und der Elektrolyt der Elektrolyt-Elektroden-Einheit der Hochtemperatur-Brennstoffzelle aus einer Keramik hergestellt, währenddessen die Verbundleiterplatten mit einer Keramik beschichtet werden. Zum Herstellen der Komponenten werden unter anderem Verfahren der Pulverbeschichtung angewendet. Unter der Pulverbeschichtung versteht man die Beschichtung oder Herstellung von Oberflächen, beispielsweise Metalloberflächen, durch Auftragen und Sintern von wärmehärtenden Pulvern. Diese können im Rotations- oder Flockverfahren, durch Pulverspritzverfahren wie Flammspritzen oder Metallspritzverfahren, aufgebracht werden. Als aufwendig erweist sich dabei die Herstellung des geeigneten Pulvers zum Pulverbeschichten, d.h. die Pulverisierung des keramischen Werkstoffes. Um eine hohe Haftfestigkeit zu erhalten, sollten die Pulverpartikel eine Korngröße im Bereich zwischen 0,1 und 500 µm aufweisen.

Als Ausgangsstoff zum Herstellen der keramischen Pulver werden im wesentlichen Metallverbindungen verwendet. Bei dem aus dem Stand der Technik bekannten Verfahren werden die Oxide der Metalle, die bereits in pulverisierter Form vorliegen, miteinander vermischt. Dieses Gemisch wird einer sehr aufwendigen Wärmebehandlung unterzogen. Dabei wird das Gemisch während mehrerer Zeitabschnitte unterschiedlichen Temperaturen ausgesetzt. Während dieser kommt es zu Reaktionen zwischen den Metalloxiden. Die einzelnen Verfahrensabschnitte sind dabei sehr aufwendig und die ablaufenden Reaktionen nur schwer zu kontrollieren. Außerdem wird das keramische Pulver zum Gewährleisten einer gleichmäßigen Förderbarkeit durch Beschichten mit einem Gleitmittel konditioniert. Das Verfahren erweist sich somit im Ganzen als sehr aufwendig.

Der Erfindung liegt nun die Aufgabe zugrunde, ein Verfahren zum Herstellen eines keramischen Pulvers zum Pulverbeschichten einer Komponente einer Hochtemperatur-Brennstoffzelle anzugeben, das eine einfache Herstellung des keramischen Pulvers in wenigen Schritten gewährleistet.

Die Aufgabe wird gemäß der Erfindung durch folgendes Verfahren zum Herstellen eines keramischen Pulvers zum Pulverbeschichten einer Komponente einer Hochtemperatur-Brennstoffzelle mit folgenden Schritten gelöst: In einem ersten Schritt wird eine Lösung aus wenigstens einem Salz wenigstens eines Metalles und aus einem organischen Komplexbildner, insbesondere Citronensäure C₆H₈O₇, thermisch zu einem porösen keramischen Werkstoff zersetzt. Der poröse keramische Werkstoff wird in einem zweiten Schritt zu einem keramischen Pulver pulverisiert.

Vorzugsweise wird das keramische Pulver bei erhöhter Temperatur in einem dritten Schritt calciniert.

Bei diesem Verfahren zum Herstellen eines keramischen Pulvers wird somit in einem Verfahrensschritt aus der metallischen Ausgangssubstanz der feste poröse keramische Werkstoff erzeugt. Der feste poröse keramische Werkstoff weist bereits eine homogene Verteilung der Atome der metallischen Ausgangssubstanz auf, wodurch eine hohe elektrische Leitfähigkeit gewährleistet ist. Nach erfolgter Pulverisierung des festen porösen keramischen Werkstoffes wird wiederum in einem Schritt die gewünschte Korngröße, bevorzugt 0,1 bis 500 µm, des keramischen Pulvers eingestellt. Die homogene Verteilung der Atome im keramischen Pulver und die Korngröße des keramischen Pulvers selbst werden somit in jeweils einem Verfahrensschritt erreicht. Da es sich im ersten Schritt um eine thermische Zersetzung handelt, findet in diesem Verfahren keine Reaktion innerhalb der Metallionen statt. Das Verfahren erweist sich somit in der Praxis als sehr einfach zu handhaben und enthält im Gegensatz zu dem aus dem Stand der Technik bekannten Verfahren nur wenige Schritte. Die gesonderte Konditionierung für eine ausreichende Förderbarkeit des keramischen Pulvers wird nicht mehr benötigt.

Vorzugsweise wird im ersten Schritt eine wässerige Lösung verwendet. Durch Verwendung der wässerigen Lösung werden in der Praxis homogenere Verteilungen der Metallionen erreicht.

Insbesondere können als Salz ein Nitrat, d.h. ein Salz der Salpetersäure (HNO₃), oder ein Acetat, d.h. ein Salz der Essigsäure, verwendet werden. Zum Durchführen des Verfahrens sind somit verschiedene Metallsalze oder auch Mischungen von verschiedenen Metallsalzen geeignet.

In einer weiteren Ausgestaltung wird die thermische Zersetzung bei einer Temperatur T₁ von wenigstens 350 °C durchgeführt. Bei diesen erhöhten Temperaturen ist eine beschleunigte Zersetzung der metallischen Ausgangssubstanz gewährleistet.

Vorzugsweise erfolgt die Zersetzung in einer Zeitdauer t₁ zwischen 1 und 5 Minuten.

Insbesondere kann die Calcinierung bei einer Temperatur T₂ von angenähert 700 °C durchgeführt werden. Durch die Calcinierung, d.h. dem Erhitzen (Brennen) des keramischen Pulvers, wird das keramische Pulver von restlichen organischen Bestandteilen befreit und außerdem die Korngröße und die Morphologie des keramischen Pulvers festgelegt.

In einer weiteren Ausgestaltung ist eine Zeitdauer t₂ von angenähert 6 Stunden für den dritten Schritt der Calcinierung vorgesehen. Neben der Temperatur T₂ für die Calcinierung ist auch die dafür vorgesehene Zeitdauer t₂ ein weiterer Parameter zum Einstellen der Korngröße des keramischen Pulvers.

Vorzugsweise wird die wässerige Lösung in einem temperaturfesten Glasgefäß zersetzt. Der Werkstoff eines solchen temperaturfesten Glasgefäßes ist z.B. unter dem Markenzeichen "Pyroceram" geschützt und wird von der Firma Corning vertrieben.

Insbesondere kann dieses Verfahren zum Pulverspritzen angewendet werden.

In einer weiteren Ausgestaltung wird das Verfahren zum Plasmaspritzen angewendet. Das Plasmaspritzen ist ein Metallspritzverfahren, das mit Hilfe von Plasmabrennern durchgeführt wird. Plasmabrenner sind Geräte zum Erzeugen hoher Temperaturen, die im Bereich zwischen 3.000 °C und 50.000 °C liegen können. Die mit diesem Verfahren hergestellten keramischen Pulver besitzen eine hohe Förderbarkeit zum Plasmaspritzen.

Durch eine Verwendung des Verfahrens wird das Herstellen einer Komponente einer Hochtemperatur-Brennstoffzelle stark vereinfacht.

Zum besseren Verständnis der Erfindung und ihrer Weiterbildungen werden drei Ausführungsbeispiele anhand zweier Figuren erläutert. Es zeigen:
- Figur 1: die Abfolge eines Verfahrensbeispiels der Erfindung zum Herstellen eines keramischen Pulvers zum Pulverbeschichten in schematischer Darstellung;
- Figur 2: einen Ausschnitt aus einer Hochtemperatur-Brennstoffzelle in schematischer Darstellung.

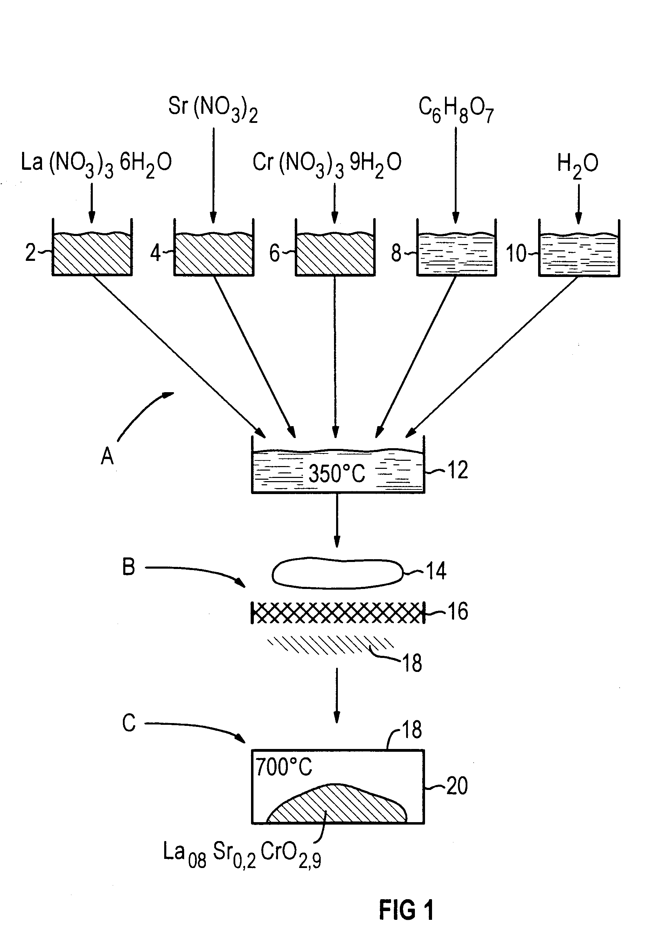

In Figur 1 erkennt man fünf Vorratsbehälter 2 bis 10. Im Vorratsbehälter 2 befindet sich Lanthannitrat La(NO₃)₃6H₂O, im Vorratsbehälter 4 Strontiumnitrat Sr(NO₃)₂, im Vorratsbehälter 6 Chromnitrat Cr(NO₃)₃9H₂O, im Vorratsbehälter 8 Citronensäure C₆H₈O₇ und im Vorratsbehälter 10 Wasser H₂O. Die Inhalte der Vorratsbehälter 2 bis 6 sind also Nitrate einer metallischen Ausgangssubstanz.

In einem ersten Schritt A werden etwa 14,4 Gew-% La(NO₃)₃6H₂O, 1,8 Gew-% Sr(NO₃)₂, 16,6 Gew-% Cr(NO₃)₃9H₂O, 33,1 Gew-% Citronensaüre C₆H₈O₇ und 34,1 Gew-% H₂O aus den jeweiligen Vorratsbehältern 2 bis 10 in einem temperaturfesten Glasgefäß 12 portionsweise zu einer wässerigen Lösung zusammengegeben. Die wässerige Lösung wird bei einer Temperatur T₁ von ca. 350°C für eine Zeitdauer t₁ von ungefähr 3 min erwärmt. In der Praxis können auch höhere Temperaturen verwendet werden und die Zeitdauer t₁ zwischen 1 und 5 min gewählt werden. Während des ersten Schrittes A zersetzt sich die wässerige Lösung unter Volumenvergrößerung zu einem festen, schwammigen und porösen keramischen Werkstoff 14. Der Werkstoff 14 glimmt beim weiteren Erwärmen auf, wobei aufgrund der entstehenden Verbrennungsgase eine zusätzliche Volumenvergrößerung und eine Zunahme der Porosität zu beobachten ist. In dem porösen keramischen Werkstoff 14 sind die Atome der metallischen Ausgangssubstanz aus den Vorratsgefäßen 2 bis 10 bereits homogen verteilt. Der poröse keramische Werkstoff 14 kann somit in einem Schritt und in kurzer Zeit hergestellt werden.

In einem zweiten Schritt B wird der poröse keramische Werkstoff 14 mit einem Sieb 16 zu einem keramischen Pulver 18 pulverisiert.

In einem dritten Schritt C bei einer Temperatur T₂ von angenähert 700°C für eine Zeitdauer t₂ von angenähert 6 h wird das keramische Pulver 18 in einem Ofen 20 calciniert, d.h. gebrannt. Am Ende des dritten Schrittes C liegt somit das keramische Pulver 18 in einer geeigneten Form zum Pulverbeschichten vor. Es hat die Zusammensetzung La_{0,8}Sr_{0,2}CrO_{2,9}.

In Abhängigkeit von der gewünschten Korngröße für das keramische Pulver 18 können die Zeitdauer t₂ und die Temperatur T₂ variiert werden. Das keramische Pulver 18 kann somit in eine förderbare Form für ein Anwendung zum Pulverspritzen gebracht werden. Es ist beispielsweise besonders zum Plasmaspritzen geeignet. Darüber hinaus kann es aber auch für alle anderen bekannten Verfahren zum Pulverspritzen verwendet werden.

In einem weiteren Ausführungsbeispiel wird nach diesem Verfahren Lanthanstrontiummanganat La_{0,75}Sr_{0,2}MnO₃ hergestellt. Dabei werden etwa 17,1 Gew-% La(NO₃)₃6H₂O, 2,2 Gew-% Sr(NO₃)₂, 13,2 Gew-% Mn(NO₃)₂4H₂O, 33,7 Gew-% C₆H₈O₇ und 33,7 Gew-% H₂O im ersten Schritt A zersetzt.

Auch bei diesen Ausführungsbeispielen werden Nitrate der metallischen Ausgangssubstanz verwendet. Anstelle der Nitrate können aber auch Acetate oder andere Salze in dem Verfahren verwendet werden. Das Verfahren ist auch dann geeignet, wenn nicht wie bei den Ausführungsbeispielen von drei Metallen, sondern beispielsweise nur von einem Metall ausgegangen wird.

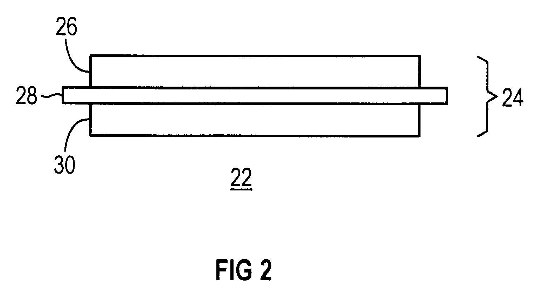

Gemäß Figur 2 umfaßt eine Hochtemperatur-Brennstoffzelle 22 eine Festelektrolyt-Elektroden-Einheit (Einheit 24). Die Einheit 24 besteht aus einer als Kathode ausgeführten Elektrode 26, einer Membran 28 und einer als Anode ausgeführten Elektrode 30, die in dieser Reihenfolge übereinander oder untereinander angeordnet sind. Die Einheit 24 ist zwischen zwei nicht näher dargestellten metallischen Verbundleiterplatten zum Versorgen der Einheit 4 mit Betriebsmitteln angeordnet. Dabei kann es sich insbesondere um Wasserstoff (H₂) und Sauerstoff (O₂) handeln. Die erforderlichen Kontakte und gegebenenfalls Schutzschichten sind ebenfalls nicht dargestellt.

Die Elektrode 26 enthält als keramischen Werkstoff Lanthanstrontiummanganat LaₓSr_{y}MnO₃ und einen Elektrolyten, wobei der Elektrolyt Zirkoniumoxid ZrO₂ mit z.B. einem Anteil Yttriumoxid Y₂O₃ oder sonstigen bekannten Beimischungen zum Stabilisieren der kubischen Phase des Zirkoniumoxid ZrO₂ versetzt ist.

Die Membran 28 und die Elektrode 30 enthalten ebenfalls jeweils Zirkoniumoxid ZrO₂ mit einem Anteil Yttriumoxid Y₂O₃ (anstelle von Yttriumoxid Y₂O₃ kann auch Scandiumoxid Sc₂O₃ verwendet werden). Die Komponenten 26 bis 30 der Einheit 24 enthalten somit jeweils einen keramischen Werkstoff, der durch das in FIG 1 beschriebene Verfahren hergestellt werden kann. Die Komponenten 26 bis 30 der Einheit 24 können somit durch Verwendung des Verfahren hergestellt werden.

Auch beim Herstellen keramischer Schutzschichten für die nicht näher dargestellten metallischen Verbundleiterplatten kann das Verfahren verwendet werden.

Das Verfahren ist aufgrund seiner einfachen Durchführbarkeit und den damit verbundenen geringeren Kosten besonders für die Herstellung von Komponenten für Hochtemperatur-Brennstoffzellen, aber auch für andere Typen von Brennstoffzellen, geeignet.

## Patentansprüche

1. Verfahren zum Herstellen eines keramischen Pulvers (18) zum Pulverbeschichten einer Komponente einer Hochtemperatur-Brennstoffzelle mit folgenden Schritten:
- In einem ersten Schritt (A) wird eine Lösung aus wenigstens einem Salz wenigstens eines Metalles und aus einem organischen Komplexbildner thermisch zu einem porösen keramischen Werkstoff (14) zersetzt, und
- in einem zweiten Schritt (B) wird der poröse keramische Werkstoff (14) pulverisiert.

2. Verfahren nach Anspruch 1, **dadurch gekennzeichnet**, daß in einem dritten Schritt (C) das erhaltene keramische Pulver (18) bei erhöhter Temperatur calciniert wird.

3. Verfahren nach Anspruch 1 oder 2, **dadurch gekennzeichnet**, daß im ersten Schritt (A) eine wässerige Lösung verwendet wird.

4. Verfahren nach einem der vorhergehenden Ansprüche , **dadurch gekennzeichnet**, daß als Salz ein Nitrat verwendet wird.

5. Verfahren nach einem der Ansprüche 1 bis 3, **dadurch gekennzeichnet**, daß als Salz ein Acetat verwendet wird.

6. Verfahren nach einem der vorhergehenden Ansprüche, **dadurch gekennzeichnet**, daß als organischer Komplexbildner Citronensäure C₆H₈O₇ verwendet wird.

7. Verfahren nach einem der vorhergehenden Ansprüche, **dadurch gekennzeichnet**, daß die thermische Zersetzung bei einer Temperatur T₁ von wenigstens 350°C durchgeführt wird.

8. Verfahren nach einem der vorhergehenden Ansprüche, **gekennzeichnet durch** eine Zeitdauer t₁ zwischen 1 und 5 Minuten für den ersten Schritt (A).

9. Verfahren nach einem Ansprüche 2 bis 8, **dadurch gekennzeichnet**, daß die Calcinierung bei einer Temperatur T₂ von angenähert 700 °C durchgeführt wird.

10. Verfahren nach einem der Ansprüche 2 bis 9, **gekennzeichnet durch** eine Zeitdauer t₂ von angenähert 6 Stunden für den dritten Schritt (C).

11. Verfahren nach einem der Ansprüche 2 bis 10, **dadurch gekennzeichnet**, daß die Korngröße des keramischen Pulvers durch die Zeitdauer t₂ und/oder die erhöhte Temperatur im dritten Schritt (C) bestimmt wird.

12. Verfahren nach einem der vorhergehenden Ansprüche, **dadurch gekennzeichnet**, daß die wässerige Lösung in einem temperaturfesten Glasgefäß (12) zersetzt wird.

13. Anwendung des Verfahrens nach einem der vorhergehenden Ansprüche zum Pulverspritzen.

14. Anwendung nach Anspruch 13 zum Plasmaspritzen.

15. Verwendung des Verfahrens nach einem der vorhergehenden Ansprüche beim Herstellen einer Komponente (26,28,30) einer Hochtemperatur-Brennstoffzelle (22).

16. Verwendung nach Anspruch 15, **gekennzeichnet durch** eine Elektrode als Komponente (26,30).
